# EUROPEAN PATENT SPECIFICATION

(11) **EP 2 127 929 B1**
(45) Date of publication and mention of the grant of the patent: **29.04.2015**
(21) Application number: 09160928.9
(22) Date of filing: 22.05.2009
(51) Int. Cl.: B60J 5/06, E05F 15/643

(54) **Sliding door closer for vehicles**
Schließeinrichtung für Fahrzeugschiebetüren
Dispositif de fermeture de portes coulissantes de véhicule

(30) Priority: 23.05.2008 IT TO20080390
(43) Date of publication of application: 02.12.2009
(73) Proprietor: Bonetto, Claudio, 10090 Trana (IT)
(72) Inventor: Bonetto, Claudio, 10090 Trana (IT)
(74) Representative: Robba, Pierpaolo

(56) References cited:
- EP-A- 0 157 391
- US-A- 4 887 390

## Description

The present invention relates to a sliding door closer for vehicles, according to the preamble of claim 1. Such a closer is known from US 4887390.

More precisely, the invention relates to a sliding door closer for motor vehicles such as motor cars, minibuses, people carriers and so on.

For some time now, it is known to equip some kinds of vehicles with sliding side access-doors, either manually operated or with motor-assisted operation.

In the first case, the sliding movement of the door, which takes place in a direction substantially parallel with the longitudinal vehicle axis, is manually controlled by the vehicle passenger who, by grasping a handle provided internally and externally of the door, causes the door opening and closing besides the latch engagement and release.

In the second case, the sliding movement of the door and the control of the latch engagement and release are assisted by an electro-mechanical mechanism and an actuator, respectively.

According to the prior art, the electro-mechanical mechanism driving the door sliding is generally based upon a flexible member, such as a rope, a belt or a chain, pulled by an electric motor reducer and connected to the sliding door through a set of diverting units. The rotation of a reel associated with the electric motor reducer causes the winding and unwinding of the flexible member and the consequent door sliding between the open and closed configurations. Still in accordance with the prior art, the sliding door is guided during translation between the open and closed configurations by a pair of guide trails, generally an upper and a lower guide trail, provided in the vehicle bodywork.

One of the problems encountered in manufacturing the mechanisms controlling the sliding of sliding doors for vehicles arises from the need to impart a sufficient force to the sliding door, during the closing operation, to enable the full closure of the door.

Actually, it is known that, to obtain the full closure of a vehicle door, it is necessary to overcome the resistance of the components of the double step safety latch typically vehicles are equipped with, and the elastic resistance of the sealing gaskets.

Contrary to hinged doors, which perform a continuous rotary movement when being opened or closed, sliding doors must generally perform a mixed movement, including a portion in a direction transverse to the longitudinal vehicle axis, corresponding to the travel necessary to leave and enter the door opening, and a portion in longitudinal direction, in order the door is brought to the vehicle's side to free the door opening and allow passengers' access. For that reason, the travel followed by a vehicle sliding door is generally defined by suitably shaped guide trails, provided in the vehicle bodywork, in which suitable bogies associated with the door slide. Said guide trails allow the door to change the motion direction during sliding to enter and leave the door opening and to move to the vehicle's side and vice versa.

The change of direction during door closing, the need to properly compress the gaskets provided in the door opening and/or the door frame to ensure the proper hydraulic tightness, and the need to wholly cock the double-step safety latch of the door to ensure the full closure thereof, entail however the need to impart to the sliding door, while it is being closed, a much higher momentum than required by its mere sliding along the guide trails.

Consequently, the mechanisms controlling the sliding of sliding doors in known vehicles are generally over-dimensioned in order to meet the momentum demand required for performing the whole movement of door closure.

Moreover, the need to operate with sufficient momentum during the longitudinal sliding of the sliding door entails the drawback that the door is to be driven at high speeds, with a resulting greater risk for the passengers' safety.

US 5,046,283 proposes a solution to the above problem by suggesting use of a multi-diameter pulley so as to achieve a fast door movement, yet at low power, during the longitudinal sliding, and a slow movement, yet at higher power, during the closing phase.

However, that solution does not wholly solve the above problem, which further entails a high cost of the mechanisms controlling door sliding, since such mechanisms are to be sufficiently powerful to operate as described above during the closing phase.

Thus, solutions have been proposed in the past where the longitudinal and transverse movements of the sliding door are driven by separate mechanisms.

US 4,887,390 discloses an example of a device capable of imparting to the sliding door the final closing push required to overcome the resistance of the sealing gaskets and the latch, the device including an eccentrically mounted rotatable pin, which is associated with the bodywork and is able to make the door perform a short transverse travel inside the door opening.

This solution however is complex to be put in practice and further has the drawback that it does not allow the manual opening of the door in case the device is blocked, since the pin is in engagement with the door at the end of the closing phase.

Therefore, it is an object of the present invention to provide a sliding door closer for vehicles, which has not the drawbacks of the prior art.

It is another object of the invention to provide a closer of the above kind, which is simple and cheap to be manufactured.

The above and other objects are achieved by the closer according to the invention as claimed in the appended claims.

Advantageously, thanks to the cooperation between the sliding rod and the contrasting member, a sliding door closer has been provided that is independent of the mechanism causing the door sliding and that, therefore, can be less powerful than prior art mechanisms and consequent less subject to wear.

Advantageously, according to the invention, the closer will be cheap and easy to be manufactured, and it can be used substantially on any type of vehicle equipped with sliding doors.

A further advantage of the invention is that the method of controlling the closer preferably includes disengaging the rod from the contrasting member at the end of the closing phase, whereby the door can be manually opened, even in case of failure of the closer itself, to the advantage of the passengers' safety.

A preferred embodiment of the invention, given by way of non-limiting example, will be described in detail hereinafter, with reference to the accompanying Figures, in which:
- Fig. 1 is a front view of the closer according to the invention;

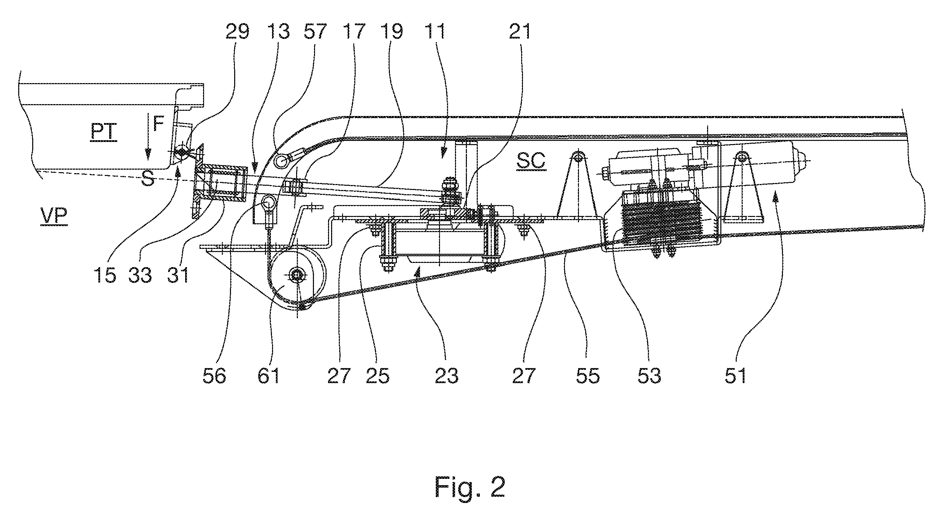

- Fig. 2 is a plan view of the closer according to the invention, with the door open in front of the door opening;
- Fig. 3 is a plan view of the closer according to the invention, with the door half-closed;
- Fig. 4 is a plan view of the closer according to the invention, with the door closed;
- Fig. 5 is a plan view of the closer according to the invention, associated with a typical mechanism controlling the door sliding movement.

With reference to the accompanying Figures, there is shown a preferred embodiment of the sliding door closer for vehicles according to the invention, generally denoted by reference numeral 11.

Sliding door closer 11 for vehicles according to the invention includes an axially movable rod 13 and a contrasting member 15. According to the invention, rod 13 and contrasting member 15 are respectively associated with vehicle body SC and sliding door PT, or vice versa, so that the forward free end of rod 13, by engaging said contrasting member 15 during the axial forward movement of the rod, causes transverse displacement of sliding door PT within door opening VP.

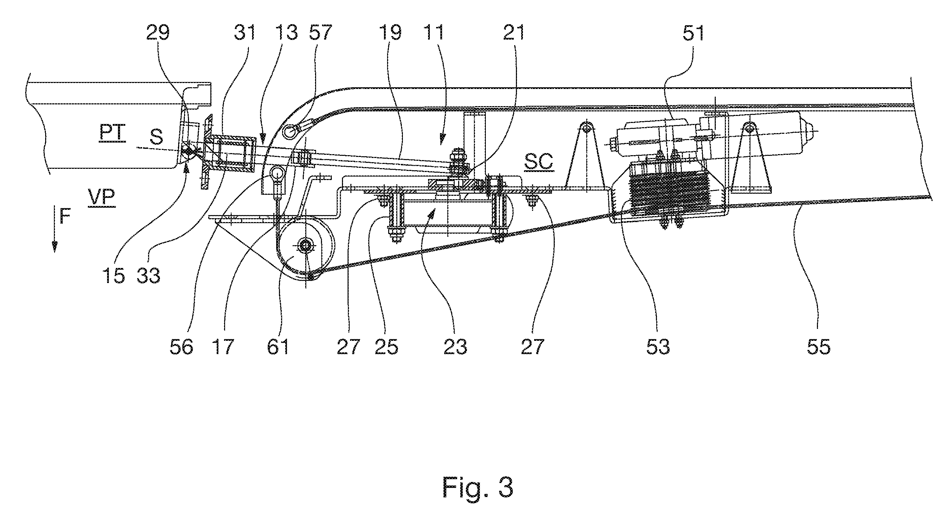

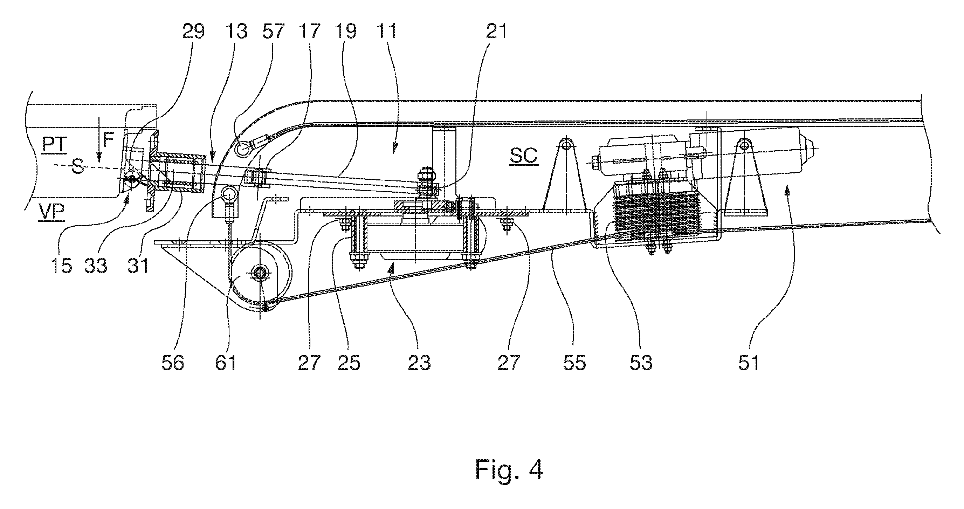

More particularly, in the example illustrated, closer 11 substantially consists of an axially movable rod 13 associated with vehicle body SC near door opening VP, and a contrasting member 15 associated with vehicle door PT at the rear side thereof. Said rod 13 and said contrasting member 15 are so arranged that, starting from a partially closed door configuration, corresponding to the first step of the double step safety latch of the vehicle (Fig. 3), the forward free end of rod 13 interferes, in its axial forward movement along axis S, with said contrasting member 15, thereby causing transverse displacement of door PT in the direction of arrow F inside the door opening, and consequently the complete closure of the door corresponding to the second step of the safety latch (Fig. 4).

According to the invention, rear end 17 of rod 13 is preferably associated with a connecting rod 19 pivotally mounted on a crank 21 driven by the shaft of an electric motor-reducer 23.

Said electric motor-reducer 23 is connected to vehicle body SC by means of brackets 25 connected to body SC by means of screws 27 or similar securing means.

Rotation of crank 21 associated with the rotating shaft of electric motor-reducer 23 causes translation of rod 13 along the axial direction substantially coinciding with axis S, i.e. longitudinally relative to the vehicle.

Said rod 13 is so positioned and sized that, during translation, its forward portion interferes with contrasting member 15 provided in the vehicle door.

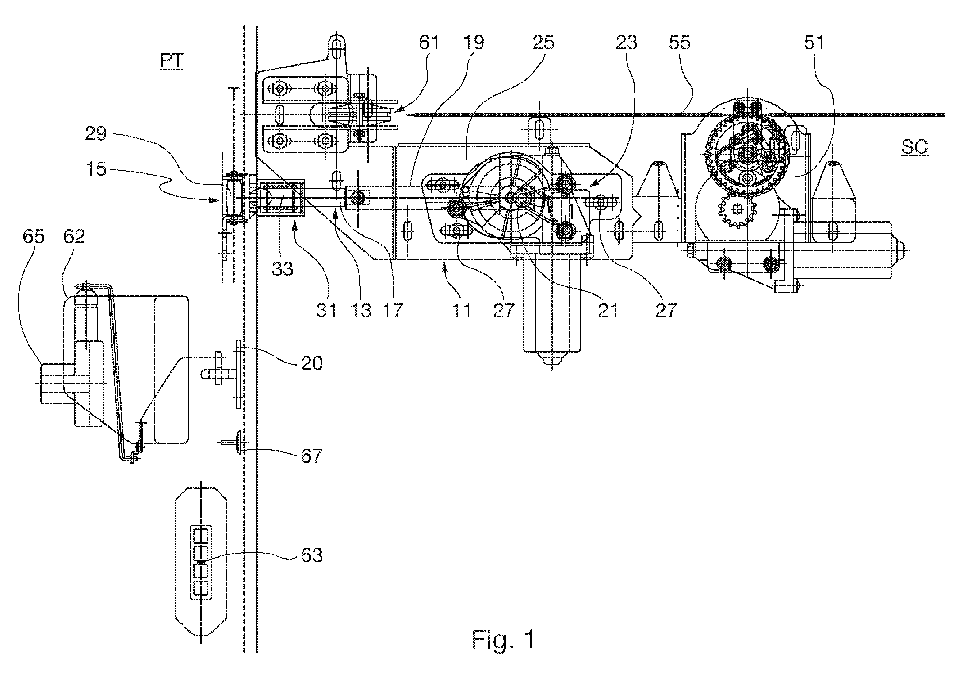

Said contrasting member 15 could for instance consist of a rotatable bush 29, axis T (Fig. 1) of which will be arranged substantially perpendicular to axis S of rod 13 and substantially parallel to the plane of door PT.

Advantageously, a ball bush 31 is provided in correspondence of the forward portion of rod 13 in order to make the translation movement of the rod itself smooth.

Still according to the invention, forward end 33 of rod 13 advantageously has a wedge-shaped profile to enable the gradual engagement of rod 13 onto contrasting member 15 and the corresponding transverse displacement of door PT inside door opening VP.

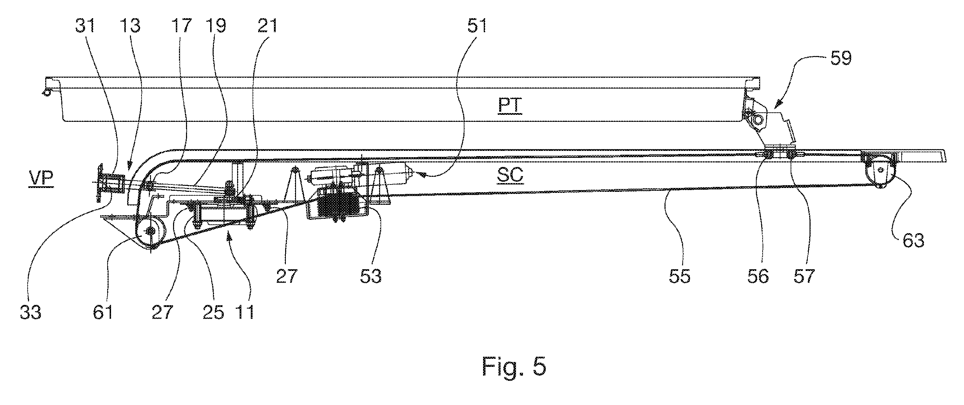

Referring to Fig. 5, an exemplary mechanism controlling the sliding movement of the door in longitudinal direction relative to the vehicle will now be briefly described.

In the illustrated example, such a mechanism includes an electric motor-reducer 51 the rotatable shaft of which has associated therewith a reel 53 on which there is wound a rope 55, e.g. a plastic-coated steel rope, ends 56, 57 of which are fastened to the upper portion of the frame of sliding door PT through an articulated bracket 59.

Corresponding diverting pulleys 61, 63 are pivotally mounted on body SC, at the forward and rear ends, respectively, of the path of rope 55.

Even if the closer according to the invention is shown associated with a rope mechanism for controlling the longitudinal sliding movement of the door, the closer could be advantageously used also in connection with different mechanisms.

Hereinafter, the operation of the closer will be disclosed with reference to the accompanying Figures, in connection with the closing phase actuated by a rope driving mechanism of the kind described hereinbefore.

In a manner known to the skilled in the art, the passenger, by acting on a pushbutton or a lever of an electric control circuit, starts the closing phase of the door.

Such a closing phase includes the sliding of door PT as far as a partly closed position is reached where the door is located within the door opening VP, but it is not yet fully closed and the latch is not yet fully engaged. In such a configuration (Fig. 3), latch 62 of door PT is locked at the first step and the end-of-closure-stroke detector 63 operates closer 11 which, through the connecting rod - crank assembly 19, 21, moves rod 13 forward as far as the wedge-shaped forward end 33 engages contrasting member 15 provided in the vehicle door: this causes the consequent transverse displacement of the door relative to the door opening so as to obtain the full door closure and the complete engagement of the latch (Fig. 4).

Advantageously, according to the invention, at the end of the door-closing phase, rod 13 is retracted in its seat due to the further rotation of crank 21, and door PT is therefore ready for being opened if required, even manually.

By pressing the control pushbutton provided in the vehicle, actuator 65 controlling the unlocking of latch 62 of door PT and the start of motor-reducer 51 of the door sliding mechanism is operated. The door thus starts sliding towards the vehicle side by coming out from the door opening along the guide rails provided in the vehicle body, as far as it reaches detector 67 for the maximum opening end-of-stroke, which stops motor reducer 51.

## Claims

1. A sliding door closer for vehicles, including a movable rod (13) and a contrasting member (15), wherein said rod (13) and said contrasting member (15) are respectively associable with the vehicle bodywork (SC) and the sliding door (PT), or vice versa, **characterised in that** the rod is axially movable and **in that** the rod and the contrasting member are arranged in such a manner that the forward free end (33) of the rod (13), by interfering with said contrasting member (15) during the forward movement of the rod, causes the transverse displacement of the sliding door (PT) within the door opening (VP).

2. The closer as claimed in claim 1, wherein the rod (13) and the contrasting member (15) are associable with the vehicle bodywork (SC) near the door opening (VP) and with the vehicle door (PT) at the rear side thereof, respectively.

3. The closer as claimed in claim 1 or 2, wherein the rear end (17) of the rod (13) , opposed to said free end, is associated with a connecting rod (19) in turn pivotally connected to a crank (21) driven by the shaft of an electric motor-reducer (23).

4. The closer as claimed in claim 3, wherein said electric motor-reducer (23) is connectable to the vehicle body (SC) by means of brackets (25) connectable to the body (SC) by means of screws (27) or similar securing means.

5. The closer as claimed in claim 3, wherein the translation direction of the rod (13) substantially coincides with axis "S" of said rod, said axis being substantially longitudinally oriented relative to the vehicle when mounted.

6. The closer as claimed in claim 5, wherein said contrasting member (15) includes a rotatable bush (29), the longitudinal axis (T) of which is substantially perpendicular to axis "S" of the rod (13) and substantially parallel to the plane of the door (PT) in mounted position.

7. The closer as claimed in claim 3, wherein a ball bush (31) is provided in correspondence of the forward portion of the rod (13) in order to make the translation movement of the rod itself smooth.

8. The closer as claimed in claim 3, wherein the forward free end (33) of the rod (13) has a wedge-shaped profile to enable the gradual engagement of the rod (13) onto the contrasting member (15) and the corresponding transverse displacement of the door (PT) inside the door opening (VP).

9. A method of operating a sliding door closer for vehicles as claimed in any preceding claim, the method being **characterised in that** it includes a step of actuating said closer to cause the axial displacement of the rod (13) as far as the forward free end of said rod is made to interfere with the contrasting member (15), and the consequent displacement of the door transversally to the door opening, whereby the closure of the door and the full engagement of the latch of the door are obtained, and a step of retracting said rod (13) into its seat whereby the door (PT) is ready for being opened if required, even manually.

## Patentansprüche

1. Schließeinrichtung für Fahrzeugschiebetüren, mit einer beweglichen Stange (13) und einem Gegenstück (15), wobei die Stange (13) und das Gegenstück (15) mit dem Fahrzeugrahmen (SC) bzw. der Schiebetür (PT) verbindbar sind oder umgekehrt, **dadurch gekennzeichnet, dass** die Stange (13) axial beweglich ist, und, dass die Stange (13) und das Gegenstück (15) so angeordnet sind, dass das vordere freie Ende (33) der Stange (13) durch Einwirkung auf das Gegenstück (15) während der Vorwärtsbewegung der Stange (13) eine transversale Verschiebung der Schiebetür (PT) in der Türöffnung (VP) bewirkt.

2. Schließeinrichtung nach Anspruch 1, wobei die Stange (13) und das Gegenstück (15) mit dem Fahrzeugrahmen (SC) in der Nähe der Türöffnung (VP) bzw. mit der Fahrzeugtür (PT) an deren hinterem Ende verbindbar sind.

3. Schließeinrichtung nach Anspruch 1 oder 2, wobei das hintere Ende (17) der Stange (13), das dem freien Ende gegenüber liegt, einem Pleuel (19) zugeordnet ist, der wiederum drehbar mit einer Kurbel (21) verbunden ist, die von einer Welle eines elektrischen Getriebemotors (23) angetrieben wird.

4. Schließeinrichtung nach Anspruch 3, wobei der elektrische Getriebemotor (23) mit dem Fahrzeugrahmen (SC) mittels Klammern (25) verbindbar ist, die an den Rahmen (SC) mittels Schrauben (27) oder ähnlichen Befestigungsmitteln befestigbar sind.

5. Schließeinrichtung nach Anspruch 3, wobei die Verschieberichtung der Stange (13) im Wesentlichen mit der Achse "S" der Stange (13) zusammenfällt, wobei die Achse nach Einbau im Wesentlichen längs relativ zu dem Fahrzeug orientiert ist.

6. Schließeinrichtung nach Anspruch 5, wobei das Gegenstück (15) eine drehbare Hülse (29) aufweist, deren Längsachse (T) in der Einbaulage im Wesentlichen senkrecht zur Achse "S" der Stange (13) im Wesentlichen parallel zur Ebene der Tür (PT) ist.

7. Schließeinrichtung nach Anspruch 3, wobei eine Kugelhülse (31) mit dem vorderen Abschnitt der Stange (13) korrespondiert, um die Verschiebebewegung der Stange (13) laufruhig zu machen.

8. Schließeinrichtung nach Anspruch 3, wobei das vordere freie Ende (33) der Stange (13) ein keilförmiges Profil hat, um einen allmählichen Eingriff der Stange (13) in das Gegenstück (15) und die entsprechende Querverschiebung der Tür (PT) innerhalb der Türöffnung (VP) zu ermöglichen.

9. Verfahren zum Betreiben einer Schließeinrichtung für Fahrzeugschiebetüren nach einem der vorstehenden Ansprüche, **gekennzeichnet durch** einen Schritt des Betätigens der Schließeinrichtung, um die axiale Verschiebung der Stange (13) bis zum Einwirken des vorderen freien Endes der Stange (13) auf das dem Gegenstück (15) und die darauf folgende Verschiebung der Tür transversal zur Türebene zu bewirken, wodurch das Schließen der Tür und der volle Eingriff des Türriegels bewirkt werden, und einen Schritt des Zurückziehens der Stange (13) in deren Sitz, wodurch die Tür (PT) bereit ist bei Bedarf geöffnet zu werden, sogar von Hand geöffnet zu werden.

## Revendications

1. Dispositif de fermeture de porte coulissante de véhicules, comprenant une tige mobile (13) et un élément opposé (15), dans lequel ladite tige (13) et ledit élément opposé (15) peuvent être associés, respectivement, à la carrosserie (SC) de véhicule et à la porte coulissante (PT), ou vice versa, **caractérisé en ce que** la tige est mobile axialement et **en ce que** la tige et l'élément opposé sont disposés de sorte que l'extrémité libre avant (33) de la tige (13), en interférant avec ledit élément opposé (15) au cours du mouvement vers l'avant de la tige, provoque le déplacement transversal de la porte coulissante (PT) à l'intérieur de l'ouverture (VP) de porte.

2. Dispositif de fermeture selon la revendication 1, dans lequel la tige (13) et l'élément opposé (15) peuvent être associés, respectivement, à la carrosserie (SC) de véhicule à proximité de l'ouverture (VP) de porte et à la porte (PT) de véhicule au niveau de son côté arrière.

3. Dispositif de fermeture selon la revendication 1 ou 2, dans lequel l'extrémité arrière (17) de la tige (13), opposée à ladite extrémité libre, est associée à une bielle (19) liée, à son tour, de manière pivotante à une manivelle (21) entraînée par l'arbre d'un motoréducteur électrique (23).

4. Dispositif de fermeture selon la revendication 3, dans lequel ledit motoréducteur électrique (23) peut être lié à la carrosserie (SC) de véhicule au moyen de supports (25) pouvant être liés à la carrosserie (SC) à l'aide de vis (27) ou de moyens de fixation similaires.

5. Dispositif de fermeture selon la revendication 3, dans lequel la direction de translation de la tige (13) coïncide sensiblement avec l'axe « S » de ladite tige, ledit axe étant orienté sensiblement longitudinalement au véhicule lorsqu'il est monté.

6. Dispositif de fermeture selon la revendication 5, dans lequel ledit élément opposé (15) comprend une boîte de glissement mobile en rotation (29) dont l'axe longitudinal (T) est sensiblement perpendiculaire à l'axe « S » de la tige (13) et sensiblement parallèle au plan de la porte (PT) dans la position montée.

7. Dispositif de fermeture selon la revendication 3, dans lequel un roulement à billes (31) est disposé en correspondance avec la partie vers l'avant de la tige (13) dans le but de faire que le mouvement de translation de la tige elle-même se fasse sans à-coup.

8. Dispositif de fermeture selon la revendication 3, dans lequel l'extrémité libre avant (33) de la tige (13) a un profil en forme de coin de façon à permettre la coopération graduelle de la tige (13) avec l'élément opposé (15) et le déplacement transversal correspondant de la porte (PT) à l'intérieur de l'ouverture (VP) de porte.

9. Procédé de mise en oeuvre d'un dispositif de fermeture de porte coulissante de véhicules selon l'une quelconque des revendications précédentes, le procédé étant **caractérisé en ce qu'**il comprend une étape consistant à actionner ledit dispositif de fermeture pour provoquer le déplacement axial de la tige (13) jusqu'à ce que l'extrémité libre avant de ladite tige interfère avec l'élément opposé (15), et le déplacement consécutif de la porte transversalement à l'ouverture de porte, ce par quoi l'on obtient la fermeture de la porte et l'engagement complet du verrou de la porte, et une étape consistant à amener ladite tige (13) en retrait dans son logement, ce par quoi la porte (PT) est prête pour une ouverture dans la mesure où elle est nécessaire, même manuellement.
